# EUROPEAN PATENT APPLICATION

(11) **EP 4 697 484 A1**
(43) Date of publication of application: **18.02.2026**
(21) Application number: 25186857.6
(22) Date of filing: 02.07.2025
(51) Int. Cl.: H01M 50/533, H01M 10/04, H01M 50/107, H01M 50/152, H01M 50/528, H01M 50/536, H01M 50/538, H01M 50/56

(54) **SECONDARY BATTERY, BATTERY PACK, AND ELECTRONIC DEVICE**

(30) Priority: 15.08.2024 CN 202421980896 U
(71) Applicant: AESC Japan Ltd., Yokohama-Shi, Kanagawa 220-0012 (JP)
(72) Inventor: QIAN, Jia, Jiangyin City, Wuxi City, 214443 (CN)
(74) Representative: Becker, Eberhard

(57) **Abstract**

The disclosure provides a secondary battery (100), a battery pack (10), and an electronic device (1). The secondary battery (100) includes a battery housing (110) including a surrounding sidewall with one end formed with an opening (113) having a rolling groove (114), an electrode assembly (120) accommodated in the battery housing (110) including a tab (125) facing the opening (113), and a current collecting component (150) including a current collecting body (151) fixedly connected to the tab (125) and a battery housing connecting portion (152) connected to the current collecting body (151), the battery housing connecting portion (152) is bent toward an axis of the battery housing (110) and welded to a surface of the rolling groove (114) facing the electrode assembly (120). An outer periphery of the battery housing connecting portion (152) facing the axis of the battery housing (110) is provided with n first notches (1521).

## Description

### BACKGROUND OF THE DISCLOSURE

### Field of the disclosure

The disclosure relates to the technical field of batteries, and in particular to a secondary battery, a battery pack, and an electronic device.

### Description of Related Art

Mechanical sealing is the mainstream packaging method for existing cylindrical batteries and is widely used due to advantages of mature technology, equipment, and fast production cycle thereof. In the cylindrical batteries of the prior art, a current collecting component is usually disposed near the opening of the battery housing, so that one end of the current collecting component is welded and connected to the sidewall of the battery housing, and another end thereof is electrically connected to the tab of the electrode assembly, thereby achieving the electrical connection between the battery housing and the electrode assembly, and then mechanical sealing is performed, including recessing a rolling groove toward the inside of the battery housing on the sidewall of the battery housing, and then closely pressing the cover plate by sealing. In this process, the bending stress generated by the current collecting component causes the internal portion of the current collecting component to warp, resulting in the welding point between the current collecting component and the tab being pulled apart, thereby causing the risk of failure of the electrical connection of the electrode assembly.

### SUMMARY OF THE DISCLOSURE

In view of the above shortcomings of the prior art, the disclosure provides a secondary battery, a battery pack, and an electronic device to alleviate the technical issue that the welding failure of the current collecting component and the tab readily occurs in the mechanical sealing process of cylindrical batteries.

In order to achieve the above object and other related objects, the disclosure provides a secondary battery. The secondary battery includes: a battery housing, an electrode assembly, and a current collecting component; the battery housing includes a surrounding sidewall, one end of the sidewall is formed with an opening, and one end of the battery housing close to the opening includes a rolling groove recessed toward an inside of the battery housing; the electrode assembly is accommodated in the battery housing, and the electrode assembly includes a tab facing the opening; the current collecting component includes a current collecting body and a battery housing connecting portion connected to an outer periphery of the current collecting body, the current collecting body is fixedly connected to the tab, the battery housing connecting portion is bent toward an axis of the battery housing and welded to a surface of the rolling groove facing the electrode assembly; an outer periphery of the battery housing connecting portion facing the axis of the battery housing is provided with n first notches, n≥1.

In the above technical solution, the first notch is disposed at the outer periphery of the battery housing connecting portion. When the battery housing connecting portion is bent toward the axis of the battery housing, the outer periphery of the battery housing connecting portion needs to be bent to a position with a smaller diameter. The provision of the first notch, on the one hand, reduces the area at the outer periphery of the battery housing connecting portion, reduces the generation of excess extruded material, and on the other hand, the first notch may also accommodate the excess extruded material, thereby alleviating the technical issues in the prior art that the outer periphery of the battery housing connecting portion may not be bent flat and there is a greater stress transfer, thereby achieving the flatness of the bending of the battery housing connecting portion, improving the reliability of the connection between the battery housing connecting portion and the battery housing, and at the same time weakening the bending stress of the battery housing connecting portion, thereby alleviating the issue of welding failure between the current collecting component and the tab caused by bending stress.

In an example of the secondary battery of the disclosure, a width of a base of the first notch is b, and a width of a top of the first notch is a, wherein 0.1 mm≤b≤a≤2 mm.

In the above technical solution, the top width of the first notch is greater than or equal to the width of the base of the first notch. Since the diameter of the battery housing connecting portion is greater closer to the top, more excess extruded material is generated during bending. This arrangement may better accommodate the excess extruded material generated when the battery housing connecting portion is bent. The maximum value of the first notch width is limited to within 2 mm, so that at the same time that the bending stress of the battery housing connecting portion is reduced, the strength of the battery housing connecting portion and the reliability of the connection with the battery housing are taken into account.

In an example of the secondary battery of the disclosure, before the battery housing connecting portion is bent, a distance from the outer periphery of the battery housing connecting portion to a side of the current collecting body away from the electrode assembly is d, and a depth of the first notch is c, wherein 0.5d≤c<d.

In the above technical solution, the battery housing connecting portion forms an included angle of approximately 90° with the current collecting body before bending, and the depth of the first notch is set to c<d, that is, the base of the first notch is higher than a side of the current collecting body away from the electrode assembly. Therefore, the battery housing connecting portion has higher strength and roundness at the same time that the first notch is designed, which is beneficial to the reliability of welding with the battery housing, which is limited to c≥0.5d, that is, the depth of the first notch is greater than or equal to half of the height of the battery housing connecting portion to achieve the first notch having sufficient space to accommodate the extruded material.

In an example of the secondary battery of the disclosure, the current collecting component includes a plurality of battery housing connecting portions, and the plurality of battery housing connecting portions are disposed around the outer periphery of the current collecting body.

In the above technical solution, the plurality of battery housing connecting portions separately surround the outer periphery of the current collecting body. On the one hand, the structural strength is higher and the contact area is greater to improve heat dissipation performance and reduce electrical resistance. At the same time, the effect of reducing material usage and reducing stress concentration is also achieved.

In an example of the secondary battery of the disclosure, along a circumferential direction of the battery housing, the battery housing connecting portion is divided into n+1 connecting segments by the first notch, surfaces of the battery housing connecting portion and the rolling groove facing the electrode assembly are welded to form first weld marks, wherein a number of the first weld marks is greater than or equal to n+1, and each of the connecting segments has at least one first weld mark.

In the above technical solution, at least one first weld mark is formed at the portion where each of the connecting segments on each of the battery housing connecting portions is welded and connected to the battery housing, that is, each of the connecting segments is welded to the battery housing respectively, and no welding is done at the first notch. This arrangement may achieve stable welding of the battery housing connecting portion and the battery housing without affecting the independent bending between each of the connecting segments. The strength of each of the connecting segments is less and each of the connecting segments is readily deformed, which is conducive to absorbing the bending stress generated when the battery housing connecting portion is bent, thereby alleviating the issue of welding failure between the current collecting component and the tab caused by bending stress.

In an example of the secondary battery of the disclosure, a width of any of the first notches is less than or equal to 0.2 mm, surfaces of the battery housing connecting portion and the rolling groove facing the electrode assembly are welded to form at least one second weld mark, and each of the second weld marks is continuous and spans all of the first notches.

In the above technical solution, a plurality of connecting segments on the battery housing connecting portion are welded to the battery housing to form a continuous second weld mark. The continuous second weld mark is conducive to improving welding efficiency. The width of any of the first notches is limited to less than or equal to 0.2 mm, so that the first notch is formed into a narrow gap. Even if the second weld mark is welded across the first notch, the first notch within this size range is conducive to being filled with molten material formed during welding to reduce the situation in which the battery housing is welded through at the first notch.

In an example of the secondary battery of the disclosure, a penetration depth of the second weld mark at a position of the first notch is less than 0.7 of a thickness of the battery housing.

In the above technical solution, the penetration depth of the second weld mark at the first notch is set to be less than 0.7 times of the thickness of the battery housing to reduce the risk of welding through the battery housing.

In an example of the secondary battery of the disclosure, the battery housing connecting portion includes a bent portion connected to the current collecting body, and second notches are respectively disposed at two sides of the bent portion along a circumferential direction of the battery housing.

In the above technical solution, the setting of the second notches may reduce the width of the bent portion, thereby reducing the bending stress generated when the battery housing connecting portion is bent. At the same time, the strength of the bent portion is reduced and the bent portion is readily deformed, which is beneficial to absorbing the bending stress and weakening the transfer of the bending stress to the welding connecting portion of the current collecting component and the tab, thereby alleviating the issue of welding failure between the current collecting component and the tab caused by bending stress.

In an example of the secondary battery of the disclosure, the battery housing connecting portion includes a bent portion connected to the current collecting body, and a weak portion extended along a circumferential direction of the battery housing is disposed on the bent portion.

In the above technical solution, a weak portion is disposed on the bent portion to weaken the stress generated by the battery housing connecting portion when being bent. At the same time, due to the lower strength of the weak portion, the weak portion of the bent portion is deformed first under the action of stress to reduce the transfer of stress to the welding connecting portion between the current collecting component and the tab, thereby alleviating the issue of welding failure between the current collecting component and the tab caused by bending stress. At the same time, the weak portion may also guide and position the bending of the bent portion, thereby improving the accuracy of the bending position of the bent portion, which is beneficial to improving the consistency of the assembly quality of the secondary battery. In addition, when the battery housing connecting portion and the battery housing are welded before the rolling groove, the weak portion may also be used as a reference line of the welding position, which is convenient for positioning the welding head during welding.

In an example of the secondary battery of the disclosure, a sum of minimum flow areas of all of the weak portions is e, and a total area of a welding line formed by welding the current collecting body and the tab is s, wherein e>s.

In the above technical solution, the minimum flow area of the weak portion is the minimum cross-sectional area of each of the weak portions along the circumferential direction of the current collecting component. The total area of the welding line formed by welding the current collecting body and the tab refers to the projection area of the welding line itself along the axial direction of the electrode assembly. The minimum flow areas of all of the weak portions, the sum e, is greater than the total area s of the welding line. This may weaken the transfer of bending stress without affecting the flow effect of the weak portion.

The disclosure also provides a battery pack including any of the above secondary batteries.

The disclosure also provides an electronic device including the above battery pack.

In the secondary battery of the disclosure, the first notch is disposed at the outer periphery of the battery housing connecting portion. When the battery housing connecting portion is bent toward the axis of the battery housing, the outer periphery of the battery housing connecting portion needs to be bent to a position with a smaller diameter. The provision of the first notch, on the one hand, reduces the area at the outer periphery of the battery housing connecting portion, reduces the generation of excess extruded material, and on the other hand, the first notch may also accommodate the excess extruded material, thereby alleviating the technical issues in the prior art that the outer periphery of the battery housing connecting portion may not be bent flat and there is a greater stress transfer, thereby achieving the flatness of the bending of the battery housing connecting portion, improving the reliability of the connection between the battery housing connecting portion and the battery housing, and at the same time weakening the bending stress of the battery housing connecting portion, thereby alleviating the issue of welding failure between the current collecting component and the tab caused by bending stress.

### BRIEF DESCRIPTION OF THE DRAWINGS

In order to more clearly explain the technical solutions in the embodiments of the disclosure or prior art, the following briefly introduces the figures needed in the description of the embodiments or prior art. Obviously, the figures in the following description are only some embodiments of the disclosure. For those of ordinary skill in the art, without inventive-step effort, other embodiments may be obtained based on these figures.
FIG. 1 is a schematic diagram of the overall structure of an example of a secondary battery of the disclosure.
FIG. 2 is a schematic diagram of the structure of an electrode assembly of an example of a secondary battery of the disclosure.
FIG. 3 is a schematic structural diagram of a current collecting component of an example of a secondary battery of the disclosure before being bent.
FIG. 4 is a front view of the current collecting component in FIG. 3.
FIG. 5 is a schematic diagram of the structure of the current collecting component in FIG. 3 after being bent.
FIG. 6 is a schematic structural diagram of a current collecting component of an example of a secondary battery of the disclosure before being bent.
FIG. 7 is a front view of the current collecting component in FIG. 6.
FIG. 8 is a schematic diagram of the structure of the current collecting component in FIG. 6 after being bent.
FIG. 9 is a schematic structural diagram of a current collecting component of an example of a secondary battery of the disclosure before being bent.
FIG. 10 is a front view of the current collecting component in FIG. 9.
FIG. 11 is a schematic diagram of the structure of the current collecting component in FIG. 9 after being bent.
FIG. 12 is a schematic structural diagram of a current collecting component of an example of a secondary battery of the disclosure before being bent.
FIG. 13 is a front view of the current collecting component in FIG. 12.
FIG. 14 is a schematic diagram of an example of a battery pack of the disclosure.
FIG. 15 is a schematic diagram of an example of an electronic device of the disclosure.

### DESCRIPTION OF THE EMBODIMENTS

The following describes the embodiments of the disclosure via specific examples. Those skilled in the art may readily understand other advantages and effects of the disclosure from the contents disclosed in this specification. The disclosure may also be implemented or applied via other different specific implementation methods, and each detail in this specification may also be modified or changed in various ways based on different viewpoints and applications without departing from the spirit of the disclosure. It should be noted that the following embodiments and features therein may be combined with each other in the absence of conflict. It should also be understood that the terms used in the embodiments of the disclosure are intended to describe specific implementation schemes rather than to limit the scope of the disclosure. The test methods in the following embodiments without specifying specific conditions are usually carried out under conventional conditions or under conditions recommended by each of the manufacturers.

When numerical ranges are given in the embodiments, it should be understood that, unless otherwise specified in the disclosure, two endpoints of each numerical range and any numerical value between the two endpoints may be selected. Unless otherwise defined, all technical and scientific terms used in the disclosure are consistent with the prior art knowledge of those skilled in the art and the records of the disclosure. The disclosure may also be implemented using any methods, equipment, and materials of the prior art that are similar or equivalent to the methods, equipment, and materials in the embodiments of the disclosure.

It should be noted that terms such as "upper", "lower", "left", "right", "middle", and "one" cited in the specification are only for the convenience of description and are not used to limit the scope of implementation of the disclosure. Changes or adjustments to relative relationships thereof should be regarded as the scope of implementation of the disclosure without substantially changing the technical content.

A secondary battery includes an electrode assembly. The electrode assembly is a component in the secondary battery in which an electrochemical reaction occurs, and may include one or more electrode assemblies.

The secondary battery also includes a battery housing, a cover plate, and a pole. The battery housing includes an end wall and a sidewall surrounding the end wall. One end of the sidewall has an opening. The electrode assembly may be assembled into the battery housing via the opening of the battery housing. The cover plate is used to cover the opening of the battery housing to achieve sealing. The pole passes through the end wall and is electrically connected to the electrode assembly to conduct the electrical energy generated by the electrode assembly out.

The mainstream packaging method of existing secondary batteries is mechanical sealing. Mechanical sealing has the advantages of mature technology and equipment and fast production cycle and is widely used. The current collecting component is electrically connected to the electrode assembly and the battery housing at the same time to achieve electrical connection between the electrode assembly and the battery housing. Specifically, a rolling groove recessed toward the inside of the battery housing is first roll-pressed once on the sidewall of the battery housing, and the rolling groove closely presses the edge of the current collecting component at a side close to the electrode assembly. The rolling groove may limit the axial displacement of the electrode assembly. The cover plate is mounted on the step formed at a side of the rolling groove away from the electrode assembly. A seal is disposed between the cover plate and the battery housing, and then the cover plate is closely pressed against the seal by a sealing method at the edge of the opening to form a reliable connection and achieve sealing of the battery housing.

There are many ways to connect the current collecting component and the battery housing. One commonly used method is: a battery housing connecting portion is disposed at the edge of the current collecting component, the battery housing connecting portion is first welded and fixed to the sidewall of the battery housing, and then a rolling groove is roll-pressed on the sidewall to allow the battery housing connecting portion to continue to be bent toward the axis of the battery housing. However, the inventors found that when the battery housing connecting portion is bent toward the axis of the battery housing, the outer periphery of the battery housing connecting portion has to be bent to a position with a smaller diameter, and the outer periphery of the battery housing connecting portion produces excess extruded material that may not be accommodated, thereby generating greater stress transfer, causing the internal portion of the current collecting component to warp, resulting in the welding point between the current collecting component and the tab being pulled apart, thereby causing the risk of electrical connection failure of the electrode assembly.

Accordingly, the disclosure provides a technical solution, in which a first notch is disposed at the outer periphery of the battery housing connecting portion. On the one hand, the area at the outer periphery of the battery housing connecting portion is reduced, reducing the generation of excess extruded material. On the other hand, the first notch may also accommodate excess extruded material, thereby alleviating the technical issue in the prior art that the outer periphery of the battery housing connecting portion may not be bent flat, weakening the bending stress of the battery housing connecting portion, and alleviating the issue of welding failure between the current collecting component and the tab caused by bending stress.

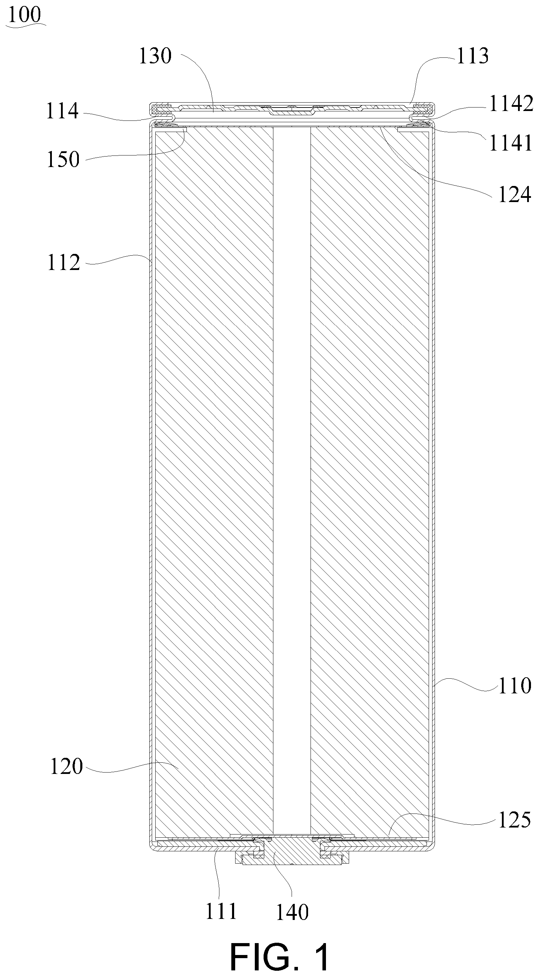

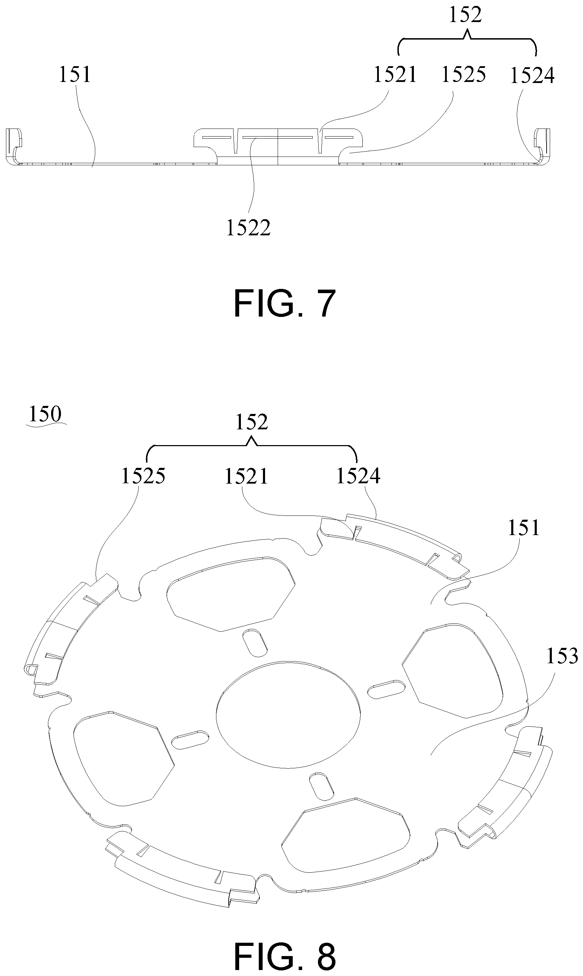

Referring to FIG. 1 to FIG. 15. The disclosure provides a secondary battery 100. The secondary battery 100 includes a battery housing 110, an electrode assembly 120, a pole 140, and a current collecting component 150.

Referring to FIG. 1, the battery housing 110 includes an end wall 111 and a sidewall 112 surrounding the end wall 111. As long as a stable sealing and electrical connection relationship may be formed, the connection between the end wall 111 and the sidewall 112 may be achieved in a variety of ways, such as integral stamping, integral casting, or split welding. The surrounding of the sidewall 112 is not limited, and may be cylindrical or prismatic, or may be along any other closed loop contour that may match the end wall 111. In the present embodiment, the outer edge of the end wall 111 is circular, and the sidewall 112 is cylindrical and surrounds the outer edge of the end wall 111, and a circular opening 113 is formed at an end of the sidewall 112 away from the end wall 111. A receiving cavity is formed in the battery housing 110 surrounded by the end wall 111 and the sidewall 112 for receiving the electrode assembly 120, the electrolyte, and other necessary components of the battery. Specifically, the diameter of the battery housing 110 may be determined according to the specific size of the electrode assembly 120, such as 18 mm, 21 mm, 46 mm, etc. The material of the battery housing 110 may be a variety, such as copper, iron, aluminum, steel, aluminum alloy, etc. In order to prevent the battery housing 110 from rusting during long-term use, a layer of rust-proof material such as metal nickel may further be plated at the surface of the battery housing 110.

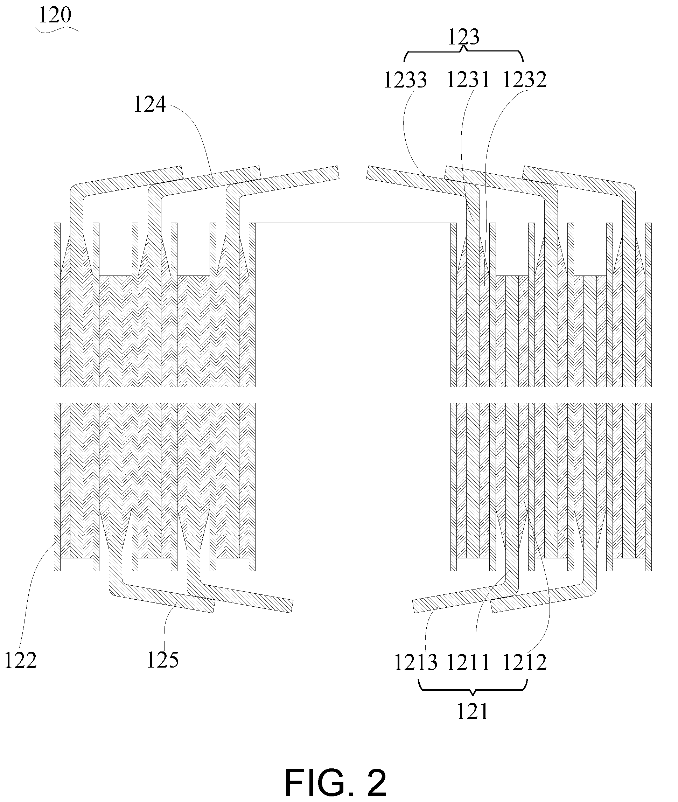

Referring to FIG. 1 and FIG. 2, the electrode assembly 120 is disposed inside the battery housing 110. The electrode assembly 120 is a component in the secondary battery 100 in which an electrochemical reaction occurs. One or a plurality of electrode assemblies 120 may be contained within the battery housing 110. The electrode assembly 120 includes a pole piece and a separator 122. The pole piece and the separator 122 are wound to form a winding structure. Specifically, in the present embodiment, the electrode assembly 120 includes a positive electrode pole piece 121, the separator 122, and a negative electrode pole piece 123 axially wound around the battery housing 110.

Please refer to FIG. 1 to FIG. 2. The positive electrode pole piece 121 includes a positive electrode collecting body 1211 and a positive electrode active material layer coated on the positive electrode collecting body 1211, a first coating area 1212 coated with the positive electrode active material layer and a first uncoated area 1213 not coated with the positive electrode active material layer are formed on the positive electrode collecting body 1211, the first coating area 1212 and the first uncoated area 1213 are arranged axially along the battery housing 110, and the first uncoated area 1213 is extended to the outside of the separator 122 at one end in the height direction of the secondary battery 100 and bent toward the axis of the battery housing 110 to form a stacked positive electrode tab 125.

Please refer to FIG. 1 to FIG. 2. The negative electrode pole piece 123 includes a negative electrode collecting body 1231 and a negative electrode active material layer coated on the negative electrode collecting body 1231, a second coating area 1232 coated with the negative electrode active material layer and a second uncoated area 1233 not coated with the negative electrode active material layer are formed on the negative electrode collecting body 1231, the second coating area 1232 and the second uncoated area 1233 are arranged axially along the battery housing 110, and the second uncoated area 1233 is extended to the outside of the separator 122 at another end in the height direction of the secondary battery 100 and bent toward the axis of the battery housing 110 to form a stacked negative electrode tab 124.

Referring to FIG. 1 and FIG. 2, the separator 122 is disposed between the positive electrode pole piece 121 and the negative electrode pole piece 123 to separate the positive electrode active material layer from the negative electrode active material layer. Taking the lithium-ion secondary battery 100 as an example, the material of the positive electrode current collecting body 1211 may be aluminum, the positive electrode active material layer includes a positive electrode active material, and the positive electrode active material may be, for example, lithium cobalt oxide, lithium iron phosphate, ternary lithium, or lithium manganese oxide. The material of the negative electrode current collecting body 1231 may be copper, and the negative electrode active material layer includes a negative electrode active material, and the negative electrode active material may be, for example, carbon or silicon. The base material of the separator 122 may be polypropylene (PP for short) or polyethylene (PE for short), etc. In order to protect and insulate the battery cell, an insulating film may also be coated at the outside of the battery cell. The insulating film may be made of PP, PE, polyethylene terephthalate (PET), polyvinyl chloride (PVC), or other high molecular polymer materials.

Please refer to FIG. 1 and FIG. 2. Furthermore, the positive electrode tab 125 in the disclosure faces the end wall 111 or the opening 113, and the negative electrode tab 124 faces another end of the battery housing 110. In the present embodiment, the positive electrode tab 125 faces the end wall 111 and is electrically connected to the pole 140 so that the pole 140 is positively charged, and the negative electrode tab 124 faces the opening 113, and the battery housing 110 is electrically connected to the negative electrode tab 124 to be negatively charged. However, in other embodiments, the negative electrode tab 124 may also be connected to the pole 140, and the positive electrode tab 125 may be connected to the battery housing 110.

Referring to FIG. 1, the cover plate 130 is sealed and mounted at the opening 113; the outer edge shape of the cover plate 130 corresponds to the shape of the opening 113, and is connected to the sidewall 112 to seal the opening 113. In a specific embodiment, a circle of rolling groove 114 recessed toward the inside of the battery housing 110 is rolled out at the area near the outer end of the sidewall 112 of the battery housing 110, and the rolling groove 114 includes a first sidewall 1141 and a second sidewall 1142. The first sidewall 1141 is close to the electrode assembly 120 and may limit the axial displacement of the electrode assembly 120. A side of the second sidewall 1142 away from the rolling groove 114 surrounds the battery housing 110 to form an annular step. The cover plate 130 is placed on the step. A sealing ring is disposed between the cover plate 130 and the annular groove 1121. The edge of the opening 113 is sealed in a manner so that the cover plate 130 closely presses the sealing ring to form a reliable connection.

Referring to FIG. 1 and FIG. 2. The pole 140 is fixed to the end wall 111 and electrically connected to the electrode assembly 120. Specifically, the end wall 111 is provided with a pole hole. The pole 140 is mounted through the pole hole and insulated from the end wall 111. One end of the pole 140 facing the electrode assembly 120 passes through the end wall 111 to be electrically connected to the positive electrode tab 125 directly or via an indirect transfer. The structural form of the pole 140 may be any suitable form that may pass through the end wall 111 to be electrically connected to the positive electrode tab 125 of the electrode assembly 120. For example, the cross-section may be circular, square, prismatic, or a special-shaped contour that may achieve stable conductivity. The pole hole corresponds to the shape of the pole 140. In the present embodiment, the cross-section of the pole 140 is circular.

Referring to FIG. 1. The current collecting component 150 is disposed between the electrode assembly 120 and the cover plate 130. The battery housing 110 and the electrode assembly 120 are electrically connected via the current collecting component 150. Specifically, the current collecting component 150 includes a current collecting body 151 and a battery housing connecting portion 152 connected to the outer periphery of the current collecting body 151. The battery housing connecting portion 152 may be an integral annular structure or one or a plurality of fan-annular structures, as long as the flow conduction requirements and the welding strength requirements between the current collecting component 150 and the battery housing 110 are met. Before the groove 114 is rolled at the battery housing 110, the battery housing connecting portion 152 is first welded and connected to the sidewall 112 of the battery housing 110. While the groove 114 is rolled, the battery housing connecting portion 152 welded and connected to the battery housing 110 continues to be bent toward the axis of the battery housing 110, eventually forming a structure bent toward the axis of the battery housing 110 and welded and connected to the surface of the rolling groove 114 facing the electrode assembly 120. Please refer to FIG. 1, FIG. 5, FIG. 8, and FIG. 11.

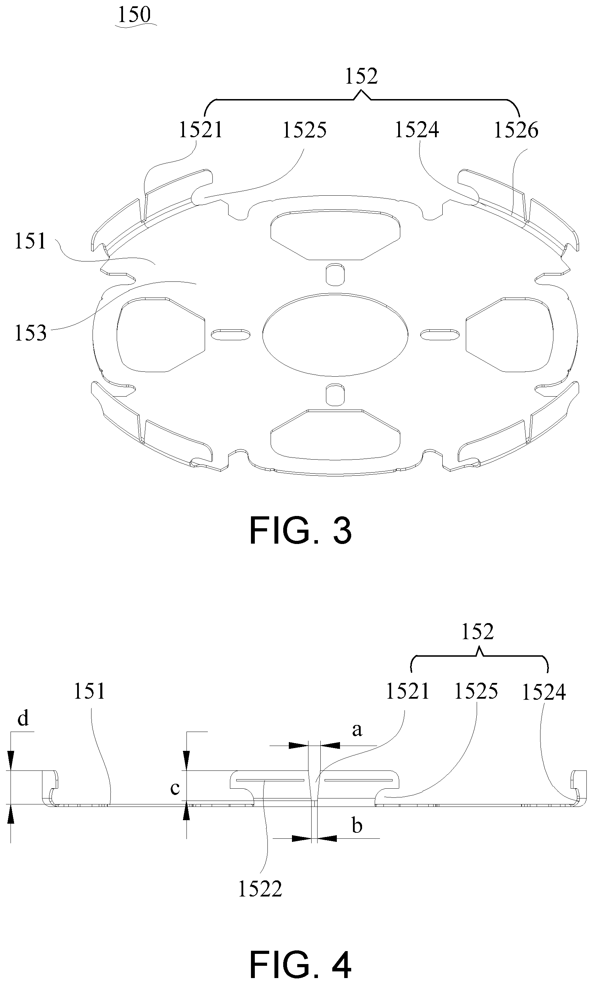

Referring to FIG. 3, FIG. 5, FIG. 6, FIG. 8, FIG. 9, FIG. 11, and FIG. 12. The current collecting body 151 is fixedly connected to the tab. There are many ways to connect the current collecting body 151 and the tab, such as welding connection or conductive adhesive connection. As long as the electrical connection between the current collecting component 150 and the tab may be achieved and the current conduction requirements may be met, in the present embodiment, the welding connection method is adopted. Furthermore, the portion where the current collecting body 151 is welded and connected to the tab is the tab connecting portion 153, and the shape and the position of the tab connecting portion 153 are both not limited. Preferably, in the present embodiment, four tab connecting portions 153 welded and connected to the tab are formed on the current collecting body 151, and the four tab connecting portions 153 are uniformly arranged in an array along the circumferential direction of the current collecting body 151. This arrangement may make the welding balance stability between the current collecting component 150 and the tab better, and have a more uniform current conduction effect, thereby improving the stability of current conduction between the battery housing 110 and the electrode assembly 120.

Please refer to FIG. 3 to FIG. 13. Considering that when the battery housing connecting portion 152 is bent toward the axis of the battery housing 110, the outer periphery of the battery housing connecting portion 152 needs to be bent to a position with a smaller diameter, and the outer periphery of the battery housing connecting portion 152 produces excess extruded material that may not be accommodated, thereby generating greater stress transfer. Furthermore, n first notches 1521 are disposed at the outer periphery of the battery housing connecting portion 152 facing the axis of the battery housing 110, n≥1, and n may be set to any number according to the difference in the size and the shape of the battery housing connecting portion 152, such as 1, 2, 3, 4, 5, 6, or more, without limitation. The provision of the first notch 1521, on the one hand, reduces the area at the outer periphery of the battery housing connecting portion 152, reduces the generation of excess extruded material, and on the other hand, the first notch 1521 may also accommodate the excess extruded material, thereby alleviating the technical issues in the prior art that the outer periphery of the battery housing connecting portion 152 may not be bent flat and there is greater stress transfer, thereby achieving the flatness of the bending of the battery housing connecting portion 152, improving the reliability of the connection between the battery housing connecting portion 152 and the battery housing 110, and at the same time weakening the bending stress of the battery housing connecting portion 152, thereby alleviating the issue of welding failure between the current collecting component 150 and the tab caused by bending stress.

Since the diameter of the battery housing connecting portion 152 is greater closer to the top, more excess extruded material is generated when the battery housing connecting portion 152 is bent. In order to better accommodate the excess extruded material generated when the battery housing connecting portion 152 is bent, please refer to FIG. 3 to FIG. 13. In an example of the secondary battery 100 of the disclosure, the width of the base of the first notch 1521 is b, and the width of the top of the first notch 1521 is a. Preferably, 0.1 mm≤b≤a≤2 mm, the sizes of a and b may be the same, or a>b, for example, the values of a and b may be: 0.1 mm, 0.2 mm, 0.3 mm, 0.5 mm, 0.7 mm, 0.8 mm, 1 mm, 1.2 mm, 1.4 mm, 1.5 mm, 1.7 mm, 1.8 mm, 1.9 mm, or 2 mm, etc. The maximum value of the width of the first notch 1521 is limited to within 2 mm, so that the strength of the battery housing connecting portion 152 and the reliability of the connection with the battery housing 110 may be taken into account at the same time of reducing the bending stress of the battery housing connecting portion 152.

In order to further reduce the bending stress of the battery housing connecting portion 152, please refer to FIG. 3 to FIG. 13. In an example of the secondary battery 100 of the disclosure, before the battery housing connecting portion 152 is bent, the distance from the outer periphery of the battery housing connecting portion 152 to a side of the current collecting body 151 away from the electrode assembly 120 is d, and the depth of the first notch 1521 is c. Preferably, 0.5d≤c<d. For example, the value of c may be 0.5d, 0.6d, 0.7d, 0.8d, or 0.9d, etc. It should be noted that the battery housing connecting portion 152 forms an included angle of approximately 90° with the current collecting body 151 before bending, and the depth of the first notch 1521 is set to c<d, that is, the depth of the first notch 1521 is higher than a side of the current collecting body 151 away from the electrode assembly 120, so that the battery housing connecting portion 152 may have higher strength and roundness while designing the first notch 1521, which is beneficial to the reliability of welding with the battery housing 110, and c≥0.5d is limited, that is, the depth of the first notch 1521 is greater than or equal to half of the height of the battery housing connecting portion 152 to achieve the first notch 1521 having sufficient space to accommodate the extruded material.

In order to reduce the bending stress of the battery housing connecting portion 152, in an example of the secondary battery 100 of the disclosure, referring to FIG. 3 to FIG. 13, the current collecting component 150 includes a plurality of battery housing connecting portions 152, and the plurality of battery housing connecting portions 152 are disposed around the outer periphery of the current collecting body 151. On the one hand, this arrangement has a higher structural strength and a greater contact area to improve heat dissipation performance and reduce resistance, and also has the effect of reducing material usage and reducing stress concentration. Furthermore, in order to facilitate the positioning connection between the battery housing connecting portion 152 and the current collecting component 150, in the present embodiment, the plurality of battery housing connection portions 152 have the same shape and the plurality of battery housing connection portions 152 are arranged in an array along the circumferential direction of the current collecting body 151. Such an arrangement may produce a more uniform flow guiding effect in the circumferential direction of the current collecting component 150 and the sidewall 112, thereby improving the stability of the flow guiding between the battery housing 110 and the electrode assembly 120.

Please refer to FIG. 3 to FIG. 13. In an example of the secondary battery 100 of the disclosure, along the circumferential direction of the battery housing 110, the battery housing connecting portion 152 is divided into n+1 connecting segments by n first notches 1521. Surfaces of the battery housing connecting portion 152 and the rolling groove 114 facing the electrode assembly 120 are welded to form first weld marks 1522, wherein a number of the first weld marks 1522 is greater than or equal to n+1. n may be set to any number according to the difference in the size and the shape of the battery housing connecting portion 152, such as 1, 2, 3, 4, 5, 6, or more. There is no limitation to the above, and each of the connecting segments has at least one first weld mark 1522. That is, each of the connecting segments is welded to the battery housing 110 respectively, and no welding is done at the first notch 1521. This arrangement may achieve stable welding of the battery housing connecting portion 152 and the battery housing 110 without affecting the independent bending between each of the connecting segments. The strength of each of the connecting segments is less and each of the connecting segments is readily deformed, which is conducive to absorbing the bending stress generated when the battery housing connecting portion 152 is bent, thereby alleviating the issue of welding failure between the current collecting component 150 and the tab caused by bending stress.

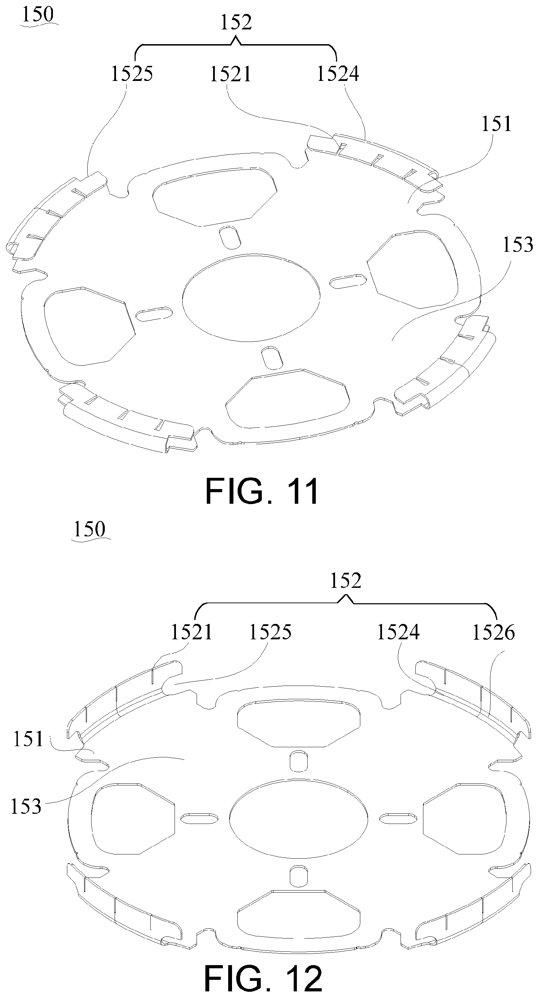

To improve welding efficiency, please refer to FIG. 12 to FIG. 13. In an example of the secondary battery 100 of the disclosure, the width of any of the first notches 1521 is less than or equal to 0.2 mm, for example, may be 0.1 mm, 0.12 mm, 0.15 mm, 0.16 mm, or 0.2 mm, etc. Surfaces of the battery housing connecting portion 152 and the rolling groove 114 facing the electrode assembly 120 are welded to form at least one second weld mark 1523, and each of the second weld marks 1523 is continuous and spans across all of the first notches 1521. That is, a plurality of connecting segments on the battery housing connecting portion 152 are welded to the battery housing 110 to form a continuous second weld mark 1523. The continuous second weld mark 1523 is conducive to improving welding efficiency. The width of any of the first notches 1521 is limited to less than or equal to 0.2 mm, so that the first notch 1521 is formed into a narrow gap. Even if the second weld mark 1523 is welded across the first notch 1521, the first notch 1521 within this size range is conducive to being filled with molten material formed during welding to reduce the situation in which the battery housing 110 is welded through at the first notch 1521.

Considering that welding is performed at the position of the first notch 1521, there is a risk of welding through the battery housing 110 due to the lack of obstruction of the battery housing connecting portion 152. In an example of the secondary battery 100 of the disclosure, preferably, the penetration of the second weld mark 1523 at the position of the first notch 1521 is less than 0.7 of the thickness of the battery housing 110. This arrangement may reduce the risk of welding through the battery housing 110.

In an example of the secondary battery 100 of the disclosure, referring to FIG. 3 to FIG. 5, each of the battery housing connecting portions 152 is provided with one first notch 1521, the shape of the first notch 1521 is V-shaped, the size of a top width a of the first notch 1521 is 1 mm, the size of a base width b is 0.5 mm, a depth c is 2.5 mm, and the size of a distance d from the outer periphery of the battery housing connecting portion 152 to a side of the current collecting body 151 away from the electrode assembly 120 is 2.8 mm. The battery housing connecting portion 152 is divided into two connecting ends by one first notch 1521, and each of the connecting segments is welded to the battery housing 110 separately and independently, so that two first welding marks 1522 disposed in sections are formed on the battery housing connecting portion 152.

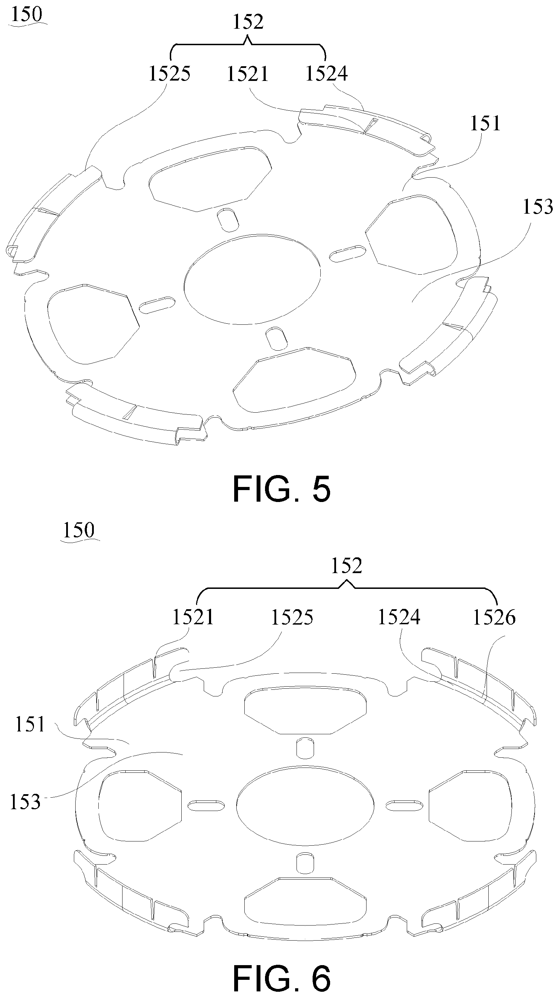

In an example of the secondary battery 100 of the disclosure, referring to FIG. 6 to FIG. 8, two first notches 1521 are disposed on each of the battery housing connecting portions 152. The first notches 1521 are V-shaped, the size of the top width a of the first notches 1521 is 0.4 mm, the size of the base width b is 0.2 mm, the depth c is 2.5 mm, and the size of the distance d from the outer edge of the battery housing connecting portion 152 to a side of the current collecting body 151 away from the electrode assembly 120 is 3 mm. The battery housing connecting portion 152 is divided into three connecting ends by the two first notches 1521, and each of the connecting segments is welded to the battery housing 110 separately and independently, so that three first welding marks 1522 disposed in sections are formed on the battery housing connecting portion 152.

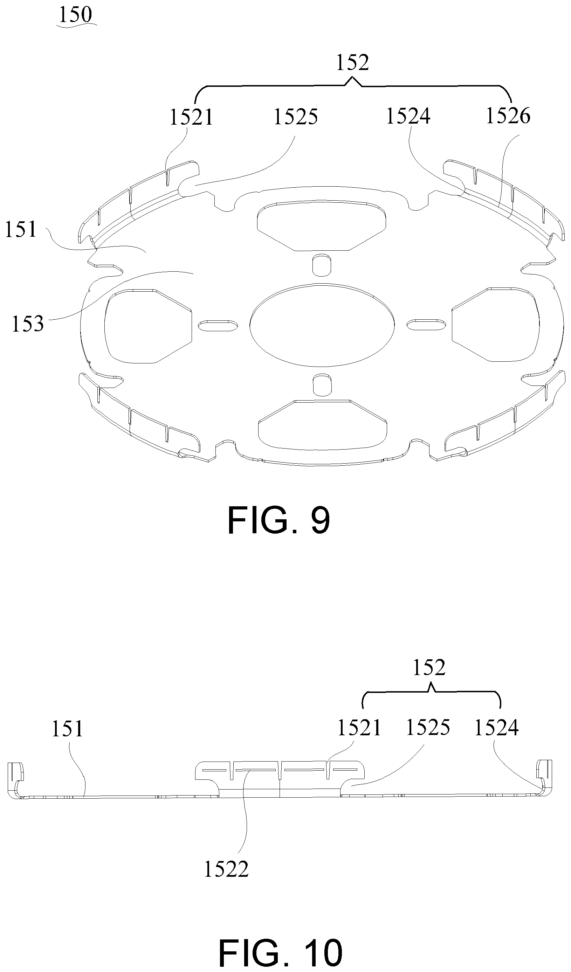

In an example of the secondary battery 100 of the disclosure, referring to FIG. 9 to FIG. 11, each of the battery housing connecting portions 152 is provided with three first notches 1521, the shape of the first notches 1521 is V-shaped, the size of the top width a of the first notches 1521 is 1 mm, the size of the base width b is 0.2 mm, the depth c is 2 mm, and the size of the distance d from the outer periphery of the battery housing connecting portion 152 to a side of the current collecting body 151 away from the electrode assembly 120 is 3 mm. The battery housing connecting portion 152 is divided into four connecting ends by the three first notches 1521, and each of the connecting segments is welded to the battery housing 110 separately and independently, so that four first welding marks 1522 disposed in sections are formed on the battery housing connecting portion 152.

In an example of the secondary battery 100 of the disclosure, referring to FIG. 12 to FIG. 13, each of the battery housing connecting portions 152 is provided with three first notches 1521, the shape of the first notches 1521 is rectangular, the size of the top width a and the size of the base width b of the first notch 1521 are the same, both are 0.1 mm, the depth c is 2 mm, and the size of the distance d from the outer periphery of the battery housing connecting portion 152 to a side of the current collecting body 151 away from the electrode assembly 120 is 3 mm. The battery housing connecting portion 152 and the battery housing 110 are continuously welded, and a second weld mark 1523 is formed on the battery housing connecting portion 152.

The above four embodiments all alleviate the technical issues in the prior art that the outer periphery of the battery housing connecting portion 152 may not be bent flat and there is greater stress transfer, thereby achieving the flatness of the bending of the battery housing connecting portion 152, improving the reliability of the connection between the battery housing connecting portion 152 and the battery housing 110, and at the same time weakening the bending stress of the battery housing connecting portion 152, thereby alleviating the issue of welding failure between the current collecting component 150 and the tab caused by bending stress.

Referring to FIG. 3 to FIG. 13, in an example of the secondary battery 100 of the disclosure, the battery housing connecting portion 152 includes a bent portion 1524 connected to the current collecting body 151. Considering that the battery housing connecting portion 152 is prone to generate deformation stress at the bent portion 1524 when bending, a portion of the deformation stress is transferred to the tab connecting portion 153, causing a certain degree of damage to the tab connecting portion 153. In severe cases, the welding point between the current collecting component 150 and the tab may be pulled apart, thereby causing the risk of electrical connection failure of the electrode assembly 120. Furthermore, second notches 1525 are respectively disposed at two sides of the bent portion 1524 along the circumferential direction of the battery housing 110. The setting of the second notches 1525 may reduce the width of the bent portion 1524, thereby reducing the bending stress generated when the battery housing connecting portion 152 is bent. At the same time, the strength of the bent portion 1524 is reduced and the bent portion is readily deformed, which is beneficial to absorbing the bending stress and weakening the transfer of the bending stress to the welding connecting portion of the current collecting component 150 and the tab, thereby alleviating the issue of welding failure between the current collecting component 150 and the tab caused by bending stress.

Referring to FIG. 3, FIG. 6, FIG. 9, and FIG. 12, in an example of the secondary battery 100 of the disclosure, the battery housing connecting portion 152 includes a bent portion 1524 connected to the current collecting body 151, and a weak portion 1526 extended along the circumferential direction of the battery housing 110 is disposed on the bent portion 1524. The weak portion 1526 may be disposed at two ends or in the middle of the bent portion 1524, or may surround the entire circumferential direction of the bent portion 1524. The weak portion 1526 may have various forms, such as a combination of one or a plurality of thinning, notching, or hollowing, as long as the bending strength of the bent portion 1524 may be weakened and the bending forming of the bent portion 1524 may be facilitated. In the present embodiment, the weak portion 1526 is a thinning structure extended along the entire circumferential direction of the bent portion 1524. A weak portion 1526 is disposed on the bent portion 1524 to weaken the stress generated by the battery housing connecting portion 152 when being bent. At the same time, due to the lower strength of the weak portion 1526, the weak portion 1526 of the bent portion 1524 is deformed first under the action of stress to reduce the transfer of stress to the welding connecting portion between the current collecting component 150 and the tab, thereby alleviating the issue of welding failure between the current collecting component 150 and the tab caused by bending stress. At the same time, the weak portion 1526 may also guide and position the bending of the bent portion 1524, thereby improving the accuracy of the bending position of the bent portion 1524, which is beneficial to improving the consistency of the assembly quality of the secondary battery 100. In addition, when the battery housing connecting portion 152 and the battery housing 110 are welded before the rolling groove 114, the weak portion 1526 may also be used as a reference line of the welding position, which is convenient for positioning the welding head during welding.

In an example of the secondary battery 100 of the disclosure, a sum of minimum flow areas of all of the weak portions 1526 is e, and a total area of a welding line formed by welding the current collecting body 151 and the tab is s, wherein e>s. It should be noted that the minimum flow area of the weak portion 1526 is the minimum cross-sectional area of each of the weak portions 1526 along the circumferential direction of the current collecting component 150, and the total area of the welding line refers to the projection area of all welding lines themselves formed by welding the current collecting body 151 and the tab along the axial direction of the electrode assembly 120. The sum e of the minimum flow areas of all of the weak portions 1526 is greater than the total area s of the welding lines to weaken the bending stress transfer without affecting the flow effect of the weak portion 1526.

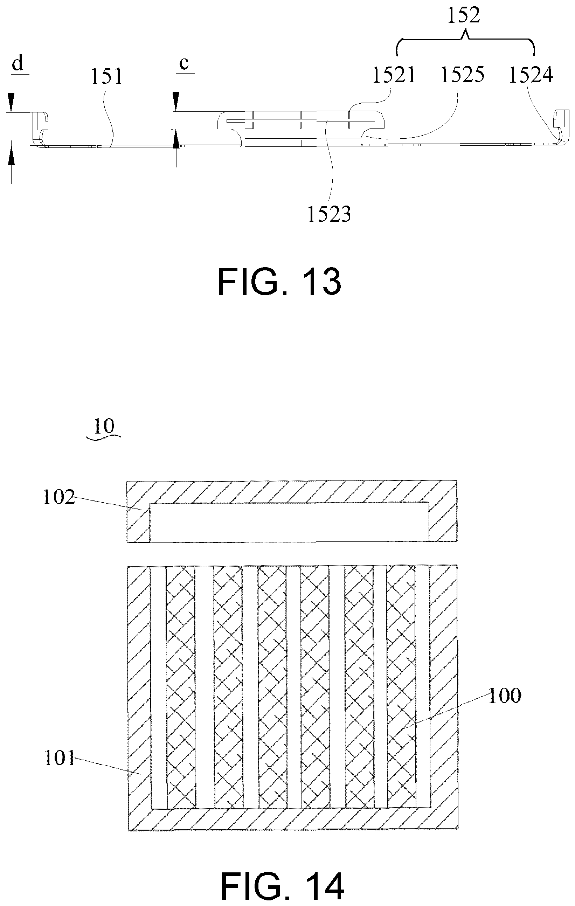

Please refer to FIG. 14. The disclosure further provides a battery pack 10. The battery pack 10 includes any of the secondary batteries 100 described above. In an embodiment of the battery pack 10 of the disclosure, the battery pack 10 includes a case 101, a case cover 102, and a plurality of secondary batteries 100. The plurality of secondary batteries 100 are placed in the case 101 and connected in series or in parallel with each other, or a mixture of series and parallel. The case cover 102 is sealed on the case 101 to protect the plurality of secondary batteries 100. It should be noted that, in addition to the secondary battery 100 of the disclosure, the battery pack 10 may also include a part such as a battery pack 10 thermal management system or a circuit board. The battery pack 10 may be a battery module or a battery pack, an energy storage cabinet, etc., which are not described one by one here.

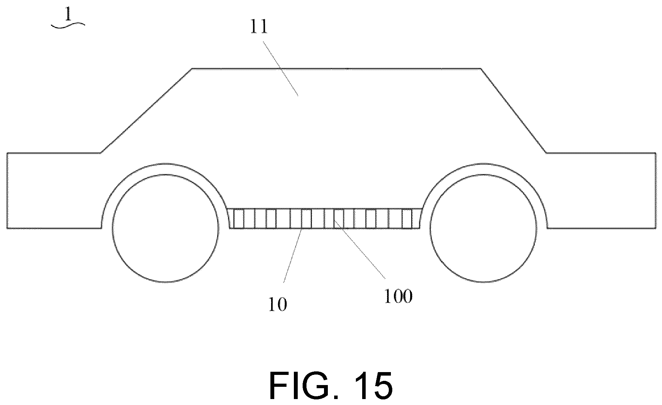

Referring to FIG. 15, the disclosure also provides an electronic device 1. The electronic device 1 includes the battery pack 10. A working portion 11 is electrically connected to the battery pack 10 to obtain electrical energy support. As one example, the electronic device 1 is a vehicle. The vehicle may be a fuel vehicle, a gas vehicle, or a new energy vehicle. The new energy vehicle may be a pure electric vehicle, a hybrid vehicle, or an extended-range vehicle, etc., but is not limited thereto. The working portion 11 is the vehicle body, and the battery pack 10 is disposed at the bottom of the vehicle body and provides electric energy support for the driving of the vehicle or the operation of the electrical elements in the vehicle. However, in some other embodiments, the electronic device 1 may also be a mobile phone, a portable device, a laptop computer, a ship, a spacecraft, an electric toy, an electric tool, and the like. The spacecraft includes an airplane, a rocket, a space shuttle, and a spacecraft, etc.; the working portion 11 may be a unit component that may obtain the electric energy of the battery pack 10 and perform corresponding work, such as a fan blade rotation unit of a fan, a vacuum work unit of a vacuum cleaner, etc. The electric toy includes a fixed or mobile electric toy, such as a game console, an electric car toy, an electric ship toy, and an electric airplane toy, etc.; the electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer, etc. An embodiment of the present application does not impose any special limitation on the electronic device 1.

In the secondary battery of the disclosure, the first notch is disposed at the outer periphery of the battery housing connecting portion. When the battery housing connecting portion is bent toward the axis of the battery housing, the outer periphery of the battery housing connecting portion needs to be bent to a position with a smaller diameter. The provision of the first notch, on the one hand, reduces the area at the outer periphery of the battery housing connecting portion, reduces the generation of excess extruded material, and on the other hand, the first notch may also accommodate the excess extruded material, thereby alleviating the technical issues in the prior art that the outer periphery of the battery housing connecting portion may not be bent flat and there is greater stress transfer, thereby achieving the flatness of the bending of the battery housing connecting portion, improving the reliability of the connection between the battery housing connecting portion and the battery housing, and at the same time weakening the bending stress of the battery housing connecting portion, thereby alleviating the issue of welding failure between the current collecting component and the tab caused by bending stress. Therefore, the disclosure effectively overcomes some practical issues in the prior art and has very high utilization value and use significance. The above embodiments are only used to illustrate the principles of the disclosure and the effect thereof, but are not intended to limit the disclosure. Anyone familiar with the technique may modify or alter the above embodiments without departing from the spirit and the scope of the disclosure. Therefore, all equivalent modifications or changes made by those having ordinary skill in the art without departing from the spirit and the technical ideas disclosed by the disclosure should still be covered by the claims of the disclosure.

## Claims

1. A secondary battery (100), **characterized in that** the secondary battery (100) comprising:
a battery housing (110) comprising a surrounding sidewall (112), one end of the sidewall (112) is formed with an opening (113), and one end of the battery housing (110) close to the opening (113) comprises a rolling groove (114) recessed toward an inside of the battery housing (110);
an electrode assembly (120) accommodated in the battery housing (110), the electrode assembly (120) comprising a tab (125) facing the opening (113);
a current collecting component (150) comprising a current collecting body (151) and a battery housing connecting portion (152) connected to an outer periphery of the current collecting body (151), the current collecting body (151) is fixedly connected to the tab (125), and the battery housing connecting portion (152) is bent toward an axis of the battery housing (110) and welded to a surface of the rolling groove (114) facing the electrode assembly (120);
wherein an outer periphery of the battery housing connecting portion (152) facing the axis of the battery housing (110) is provided with n first notches (1521), and n≥1.

2. The secondary battery (100) according to claim 1, wherein a width of a base of the first notch (1521) is b, and a width of a top of the first notch (1521) is a, wherein 0.1 mm≤b≤a≤2 mm.

3. The secondary battery (100) according to claim 1 or 2, wherein before the battery housing connecting portion (152) is bent, a distance from the outer periphery of the battery housing connecting portion (152) to a side of the current collecting body (151) away from the electrode assembly (120) is d, and a depth of the first notch (1521) is c, wherein 0.5d≤c<d.

4. The secondary battery (100) according to any one of claims 1 to 3, wherein the current collecting component (150) comprises a plurality of the battery housing connecting portion (152)s, and the plurality of battery housing connecting portion (152)s are disposed around the outer periphery of the current collecting body (151).

5. The secondary battery (100) according to any one of claims 1 to 4, wherein along a circumferential direction of the battery housing (110), the battery housing connecting portion (152) is divided into n+1 connecting segments by the first notch (1521), surfaces of the battery housing connecting portion (152) and the rolling groove (114) facing the electrode assembly (120) are welded to form first weld marks, a number of the first weld marks is greater than or equal to n+1, and each of the connecting segments has at least one first weld mark (1522).

6. The secondary battery (100) according to any one of claims 1 to 5, wherein a width of any of the first notches (1521) is less than or equal to 0.2 mm, surfaces of the battery housing connecting portion (152) and the rolling groove (114) facing the electrode assembly (120) are welded to form at least one first weld mark (1523), and each of the first weld marks (1523) is continuous and spans all of the first notches (1521).

7. The secondary battery (100) according to any one of claims 1 to 6, wherein a penetration depth of the first weld mark (1523) at a position of the first notch (1521) is less than 0.7 times of a thickness of the battery housing (110).

8. The secondary battery (100) according to any one of claims 1 to 7, wherein the battery housing connecting portion (152) comprises a bent portion (1524) connected to the current collecting body (151), and second notches (1525) are respectively disposed at two sides of the bent portion (1524) along a circumferential direction of the battery housing (110).

9. The secondary battery (100) according to any one of claims 1 to 8, wherein the battery housing connecting portion (152) comprises a bent portion (1524) connected to the current collecting body (151), and a weak portion (1526) extended along a circumferential direction of the battery housing (110) is disposed on the bent portion (1524).

10. The secondary battery (100) according to any one of claims 1 to 9, wherein a sum of minimum current flow areas of all of the sweak portion (1526) is e, and a total area of a welding line formed by welding the current collecting body (151) and the tab (125) is s, wherein e>s.

11. A battery pack (10), **characterized in that** the battery pack (10) comprising the secondary battery (100) in any of claims 1 to 10.

12. An electronic device (1), **characterized in that** the electronic device (1) comprising the battery pack (10) according to claim 11.
